# EUROPÄISCHE PATENTSCHRIFT

(11) **EP 1 800 376 B1**
(45) Veröffentlichungstag und Bekanntmachung des Hinweises auf die Patenterteilung: **02.12.2015**
(21) Anmeldenummer: 05790064.9
(22) Anmeldetag: 28.09.2005
(51) Int. Cl.: H02B 13/025

(54) **ANORDNUNG ZUR ÜBERWACHUNG EINER ANLAGE AUF THERMISCHE BELASTUNG**
ARRANGEMENT FOR MONITORING AN INSTALLATION FOR THERMAL STRESSES
SYSTÈME DE SURVEILLANCE DU STRESS THERMIQUE SUBI PAR UNE INSTALLATION

(30) Priorität: 15.10.2004 DE 102004050191
(43) Veröffentlichungstag der Anmeldung: 27.06.2007
(73) Patentinhaber: ABB AG, 68309 Mannheim (DE)
(72) Erfinder: KÖHLER, Jens, 68199 Mannheim (DE); MERKEL, Hans-Peter, 69198 Schriesheim (DE)
(86) Internationale Anmeldenummer: PCT/EP2005/010444
(87) Internationale Veröffentlichungsnummer: WO 2006/042619

(56) Entgegenhaltungen:
- EP-A- 0 092 027
- DE-A1- 10 000 607
- JP-A- H03 188 339
- US-B1- 6 188 035
- PATENT ABSTRACTS OF JAPAN Bd. 016, Nr. 068 (P-1314), 19. Februar 1992 (1992-02-19) & JP 03 261835 A (FUJITSU SYST CONSTR KK; others: 01), 21. November 1991 (1991-11-21)

## Beschreibung

Die Erfindung betrifft eine Anordnung zur Überwachung einer Schaltanlage auf thermische Belastung nach dem Oberbegriff des Patentanspruches 1. Eine solche Anordnung ist beispielsweise aus der JP-A-03/188339 bekannt.

Es ist allgemein bekannt, dass beispielsweise Schaltanlagen aus Sicherheitsgründen auf bestimmte thermische Belastungen überwacht werden. Der Überwachung liegt der Gedanke zu Grunde, dass besondere thermische Belastung insbesondere an bestimmten Stellen der Schaltanlage vorkommen können, zum Beispiel an den beweglichen Kontakten eines Schalters oder an anderen Stellen, die auf Grund von Erfahrungswerten vergleichsweise häufig einer thermischen Be- oder sogar Überlastung unterliegen.

Eine allgemein bekannte Möglichkeit diese kritischen Stellen zu überwachen besteht darin, an all diesen Stellen Temperatursensoren anzubringen und diese Temperatursensoren mit einem Überwachungssystem zu koppeln. Tritt nun an einer dieser Stellen eine thermische Überlastung ein, wird sich dies in einer Temperaturerhöhung des betreffenden Bauteils zeigen, so dass der dort angeordnete Temperatursensor ein entsprechendes Signal an die Überwachungseinrichtung übermittelt. Bei einer derartigen Anordnung ist es notwendig, einen vergleichsweise großen Aufwand zu betreiben, da die thermische Überlastung an vielen Stellen der Schaltanlage auftreten kann. Das erfordert eine entsprechend hohe Zahl an Sensoren sowie eine entsprechend komplexe Überwachungseinrichtung. Auch die Verkabelung zwischen den Sensoren und der Überwachungseinrichtung bedeutet einen zusätzlichen Aufwand.

Aus der Publikation DE 10000607 A1 ist ein Temperaturüberwachungssystem für ein elektrisches Gerät, wie z.B. ein Computer oder Drucker, bekannt, in dem ein Gas-Sensor im Luftstrom, der von einem Lüfter zum Zwecke der Kühlung des Gehäuses erzeugt wird, angeordnet ist.

Ausgehend vom vorgenannten Stand der Technik, ist es die Aufgabe der Erfindung, eine Anordnung zur Überwachung einer Anlage auf thermische Belastung anzugeben, die besonders einfach aufgebaut ist und zugleich eine sichere Überwachung gewährleistet.

Diese Aufgabe wird gelöst durch die erfindungsgemäße Anordnung zur Überwachung einer Schaltanlage auf thermische Belastung mit den in Patentanspruch 1 genannten Werkmalen.

Durch die erfindungsgemäße Anordnung zur Überwachung einer Schaltanlage auf thermische Belastung wird vorteilhafterweise erreicht, dass zum Beispiel mit nur einem Sensor eine komplette Schaltanlage überwachbar ist, wobei die zu überwachenden Stellen in ihrer Anzahl prinzipiell unbegrenzt sind. So ist es ohne weiteres denkbar, dass die Indikatorsubstanz an einer Vielzahl von Bauteilen der Schaltanlagen angeordnet ist, insbesondere an denjenigen, an denen eine thermische Belastung zu erwarten ist. Dabei reicht es aus, dass der Sensor im Bereich der Schaltanlage so angeordnet ist, dass die Indikatorsubstanz überhaupt detektierbar ist. Falls mehrere Sensoren eingesetzt werden, ist die erfindungsgemäße Anordnung flexibler ausbaubar und einsetzbar.

Die Entfernung von Sensor und Indikatorsubstanz spielt lediglich für die Reaktionszeit der Detektion einer thermischen Belastung eine Rolle, jedoch nicht für deren prinzipiellen Detektion. Die Indikatorsubstanz ist jedoch dann nicht detektierbar, wenn diese innerhalb einer Kapselung angeordnet ist, während sich der Sensor außerhalb der Kapselung befindet.

Somit ist in vorteilhafter Weise die Entkopplung der Anzahl der Sensoren von der Anzahl der zu überwachenden Stellen beziehungsweise Bauteile in einer Anlage erreicht. Demgemäss ist die erfindungsgemäße Anordnung zur Überwachung einer Schaltanlage auf thermische Überlastung in vorteilhafter Weise vereinfacht gegenüber den seither bekannten Anordnungen.

Erfindungsgemäß ist der wenigstens eine Sensor ein Gaschromatograph oder ein Gassensor.

Ein Gaschromatograph hat den besonderen Vorteil, dass sich dieser auf einer Indikatorsubstanz oder auf eine Gruppe von Stoffen, die als Indikatorsubstanz dienen, einstellen lässt, so dass sich die Indikatorsubstanz als solche, während einer längeren Betriebszeit der Schaltanlage auch durch eine andere Indikatorsubstanz austauschen lässt. Dann muss lediglich der Gaschromatograph auf die neue Indikatorsubstanz eingestellt werden. Als Indikatorstoff kommen in diesem Fall prinzipiell alle Stoffe in Betracht, die im Temperaturbereich, der für die Überwachung der Anlage angedacht ist, zumindest teilweise in den gasförmigen Zustand übergehen.

Ein besonderer Vorteil eines Gassensors als Sensor für die erfindungsgemäße Anordnung zur Überwachung einer Anlage auf thermischen Belastung liegt darin, dass ein Gassensor vergleichsweise günstig zu erwerben ist, so dass die erfindungsgemäße Anordnung besonders preisgünstig aufgebaut werden kann. Darüber hinaus sind Gassensoren für eine Vielzahl unterschiedlicher Stoffe verfügbar und darüber hinaus für quasi beliebige Stoffe designbar, insbesondere auch für Aromaten. Gassensoren sind prinzipiell auf jeden Stoff der zur Detektion gewünscht wird, anpassbar. Bei der bereits heute existierenden Vielzahl von Gassensoren, beispielsweise der Universal-Gassensor GGS 100 QT der Firma Umwelt Sensor Technik (UST) GmbH, Geschwenda, der zum Beispiel besonders geeignet ist für die Detektion von Brom, ist es jedoch kein Problem eine passenden Indikatorsubstanz auszuwählen, zum Beispiel einen bei Wärmezufuhr Brom freisetzenden Anstrich für die Verwendung in eine Niederspannungsschaltanlage.

Aber auch der Gassensor GGS 3000 der gleichen Firma kommt in Betracht, insbesondere zur Detektion von Kohlenwasserstoffen (CxHy). Als Indikatorsubstanz können dann zum Beispiel Polyacrylnitril Polyamid oder Polystyrol in Frage, von den bekannt ist, dass diese bei ERwärmung Kohlenwasserstoffe freisetzen.

Weiter weist der Sensor der erfindungsgemäßen Anordnung eine Ventilationseinheit auf, die einen vorbestimmten Gasstrom der Umgebung über das Detektorelement des Sensors leitet.

Damit ist erreicht, dass ein bestimmter vorgebbarer Volumenstrom des den Sensor umgebenden Gases über das Detektorelement geleitet wird. Diese Zwangskonvektion verkürzt die Detektionszeit einer zu erfassenden thermische Beanspruchung.

Zudem wird dem Sensor ein gleichmäßiger Gasstrom zugeführt, so dass die Genauigkeit des Sensors auf dieser Weise erhöht ist.

Die Indikatorsubstanz selbst ist auf die entsprechenden Bauteile auftragbar, die zu überwachen sind. Es ist aber auch innerhalb des Erfindungsgedankens, dass die Indikatorsubstanz einem Trägermedium beigemischt ist.

Dieses Trägermedium ist insbesondere ein Betriebsmittel der Anlage oder der Schaltanlage. Bei beweglichen Bauteilen, wie beispielsweise den Kontakten eines Schaltgerätes, bietet sich der entsprechende Schmierstoff als Trägermedium an, welcher im Bereich der Kontakte aufgetragen ist.

Es ist aber auch die Beimischung der Indikatorsubstanz in einem Lack denkbar, der dann auf die zu überwachenden Bauteile aufzutragen ist. Ein Lack hat den besonderen Vorteil, dass er ohne weiteres großflächig auf viele Bauteile aufgetragen werden kann und derart die überwachte Anzahl an Bauteilen stark erhöhbar ist.

Eine vorteilhafte Weiterbildung der Erfindung sieht vor, dass durch die Auswahl der Indikatorsubstanz oder durch den Mengenanteil an Indikationsstoff im Trägermedium der Grenzwert zur Detektion der thermischen Belastung einstellbar ist.

Durch eine entsprechende Auswahl der Indikatorsubstanz ist letztlich also die Konzentration der Indikatorsubstanz in der sie umgebenden Atmosphäre bei einer bestimmten Temperatur, bestimmbar.

Eine weitere Ausgestaltung der erfindungsgemäßen Anordnung ist dadurch gekennzeichnet, dass eine Alarmierung wegen detektierter thermischer Beanspruchung erst ab einem vorgebbaren Schwellenwert an Konzentration der Indikatorsubstanz in der sie umgebenden Atmosphäre erfolgt.

Auf diese Weise ist mit der Einstellung eines maximal zulässigen Grenzwertes an Konzentration von Indikatorsubstanz in der sie umgebenden Atmosphäre die Grenztemperatur zur Definition einer thermischen Beanspruchung wählbar.

Weitere vorteilhafte Ausgestaltungen der erfindungsgemäßen Anordnung sind den weiteren abhängigen Ansprüchen zu entnehmen.

Anhand der in den Zeichnungen dargestellten Ausführungsbeispielen sollen die Erfindung, vorteilhafte Ausgestaltungen und Verbesserungen der Erfindung, sowie besondere Vorteile der Erfindung näher erläutert und beschrieben werden.

Es zeigen:
- Fig. 1: eine Anordnung zur Überwachung einer Schaltanlage und
- Fig. 2: eine Anordnung zur Überwachung einer Schaltanlage auf thermische Überlastung gemäß vorliegender Erfindung.

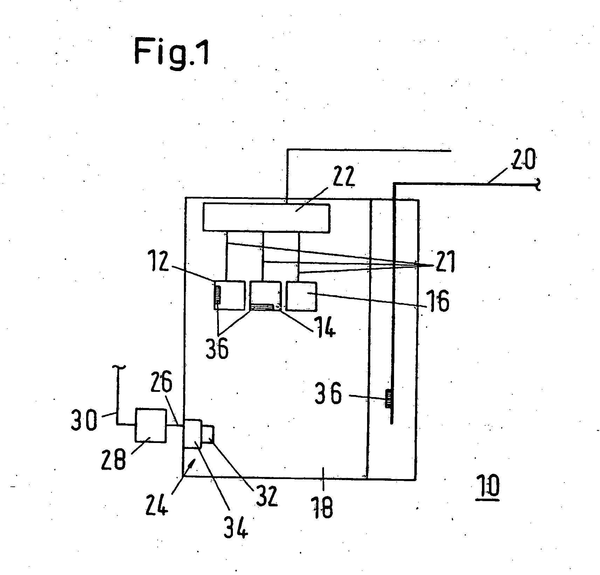

Fig. 1 zeigt eine erste Anordnung 10 zur Überwachung eines ersten 12, eines zweiten 14 sowie eines dritten Schaltgerätes 16, die in einem Schaltschrank 18 angeordnet sind. Die erste Anordnung 10 zeigt lediglich eine schematische Darstellung, ohne das es dabei auf Größenverhältnisse oder eine detaillierte Darstellung ankäme.

Ein Teil des Schaltschrankes 18 ist als Kabelraum vom restlichen Teil des schaltschrankes 18 abgeteilt und über ein Kabel 20 mit einer hier nicht dargestellten Stromversorgung verbunden. Im gewählten Beispiel soll der Schaltschrank 18 nebst dessen Einbauten eine Schaltanlage darstellen.

Ein Datensammler 22, der mit jedem der Schaltgeräte 12, 14, 16 verbunden ist, soll lediglich darstellen, dass die Schaltgeräte Signale beziehungsweise Daten verarbeiten und mit anderen Geräten austauschen können.

Ein erster Gassensor 24 ist innerhalb des Schaltschrankes 18 an einer der Schaltschrankwände angeordnet, und mittels einer ersten Signalleitung 26 mit einer Auswertungselektronik 28, die außerhalb des Schaltschrankes 18 angeordnet ist, verbunden. Die Auswertungsetektronik 28 kann aber ohne weiteres auch innerhalb des Schaltschrankes 18 angeordnet sein.

Die Auswertungselektronik 28 ist so ausgestaltet, dass die vom Gassensor 24 erhaltenen Signale erfasst und aufbereitet werden. Darüber hinaus kann die Auswertungselektrönik 28 so ausgeschaltet sein, dass diese im Falle einer Überschreitung von vorgegebenen Grenzwerten Alarmsignale über eine zweite Signalleitung 30 an eine Alarmzentrale, die in dieser Figur nicht dargestellt ist, übermittelt werden oder die aufbereiteten Signale und Werte in ein Prozessleitsystem gibt, so dass dort eventuelle Alarmierungen oder Überschreitungen von Grenzwerten festgestellt werden können.

Der Gassensor 24 kann in vorteilhafter Weise auch an den Datensammler 22 angeschlossen werden. Dann werden die Gassensordaten über den Datensammler in ein Datennetzwerk geleitet, so dass die Auswertungselektronik 28 an einer anderen Stelle des Datennetzwerkes anschließbar ist. Es ist aber auch möglich, die Auswertungselektronik 28 in Nahbereich des Gassensors 24 anzuordnen und als dessen Ausgangssignal ein Fehlersignal zu definieren, dass der angeschlossene Datensammler 22 übermittelt wird.

Der Sensor 24 selbst weist ein Sensorelement 32 auf, welches auf einem Basiselement 34 angeordnet ist. Dabei hat das Sensorelement 32 direkten Kontakt zu der im Schaltschrank 18 vorhandenen Umgebungsluft, während das Basiselement 34 eine leichte Montage des Sensors 24 sicherstellt, sowie einen leichten elektrischen Anschluss des Sensorelementes 32 ermöglicht.

In den gezeigten Schaltgeräten 12, 14, 16 dieses Beispiels ist noch ein Indikatorstoff 36 gezeigt, der einem Lack beigemischt sein soll. Zur Veranschaulichung, dass der Indikatorstoff 36 an verschiedenen Stellen der Schaltgeräte 12, 14, 16 angeordnet sein kann, wurde der Indikatorstoff 36 an verschiedenen Positionen der jeweiligen Schaltgeräte 12, 14, 16 angeordnet, symbolisch für zum Beispiel die Anordnung aus Kontakten, Kabeln und so weiter.

Dabei wirken die einzelnen Elemente der erfindungsgemäßen Anordnung wie folgt zusammen. Die Indikatorstoff 36 ist im wesentlichen in ihrem Trägermedium, nämlich dem Lack, gebunden. Gleichwohl diffundiert ein bestimmter Teil des Indikatorstoffes 36 in die sie umgebenden Luft. Nach einer gewissen Zeit wird sich dort eine bestimmte Konzentration an Indikatorstoff einstellen. Diese Konzentration wird vom Gassensensor 24 nebst Äuswertungselektronik 28 ermittelt. Dabei sind die heute verfügbaren Gassensensoren so empfindlich, dass teilweise bereits ein Molekül des Indikatorstoffes ausreicht, um von einem Gassensor wahrgenommen werden zu können.

Die Konzentration des Indikatorstoffes in der sie umgebenden Luft ist abhängig von der Temperatur des Indikatorstoffes. Steigt die Temperatur des Indikatorstöffes, wird eine größere Menge aus dem Lack freigesetzt und zu einer höheren Konzentration in der sie umgebenden Luft führen. Auslöser für einen solchen Temperaturanstieg kann insbesondere eine thermische Be- oder Überanspruchung, also ein Temperaturanstieg in dem Bauteil sein, auf dem sich die Indikatorsubstanz beziehungsweise der Lack befindet. Im Gassensor 24 oder in der Auswertungselektronik 28 kann dann beispielsweise ein Schwellenwert vorgegeben werden, der mit einer maximal zulässigen Temperatur am Bauteil korrespondiert, und der bei seinem Überschreiten einen Alarm auslöst.

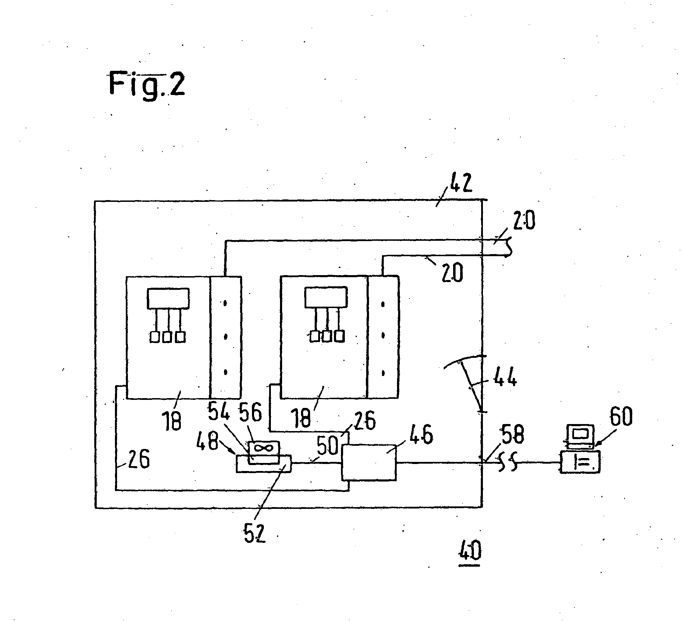

Fig. 2 zeigt eine erfindungsgemäße Anordnung 40 zur Überwachung von zwei Schaltschränken 18, die in einem Raum 42 angeordnet sind, der wiederum über eine Tür 44 zugänglich ist. Die in dieser Figur verwendeten Bauteile, die auch in der Fig. 1 verwendet wurden, sind mit den entsprechend gleichen Bezugszeichen versehen.

Auch in diesem Beispiel sind die Schaltschränke 18 mit einem Kabel 20 an Geräte oder Systeme außerhalb des Raumes 42 verbunden. Die ersten Signalleitungen 26 der beiden Schaltschränke 18 sind mit einem Auswertegerät 46 verbunden, welches vergleichbare Funktionen und Aufgaben hat, wie die Auswertungselektronik 28 gemäß der Fig. 1. Im Falle des Auswertegerätes 46 jedoch werden die Signale von zwei Gassensoren 24 aus den Schaltschränken 18 sowie ein weiteres Signal eines weiteren Gassensors 48 verarbeitet, welches durch die dritte Signalleitung 50 zum Auswertegerät 46 geführt wird.

Der weitere Gassensor 48 weist ein Basisbauteil 52 auf, in welches ein Sensorbauteil 54 integriert wurde, so dass insgesamt ein raumsparender weiterer Gassensor 48 im Vergleich zum Gassensor 24 entstanden ist. Zudem ist unmittelbar an der nach außen weisenden Fläche des Sensorbauteils 54 ein Mikrolüfter 56 angebracht, so dass der vom Mikrolüfter 56 erzeugte Luftstrom direkt den Sensorenbereich des Sensorbauteils 54 anbläst. Auf dieser Weise wird ein durch die Dimensionierung des Mikrolüfters 56 bestimmter Luftstrom ständig über die Sensorfläche des Sensorbauteils 54 geführt und auf diese Weise die Überwachung des weiteren Gassensors 48 durch Zwangskonvektion verbessert.

Der Vorteil einer derartigen Anordnung, wie die zweite Anordnung 40 zeigt, liegt darin, dass zum Einen die Schaltschränke 18 individuell überwacht werden, so dass eventuelle Vorkommnisse schnell lokalisiert werden können. Zum Anderen übernimmt der weitere Gassensor 48 die Raumüberwachung des Raumes 42, in dem weitere Bauteile an- . geordnet sein können, die ebenfalls auf Temperaturbelastungen überwacht werden müssen oder sollten. Diese sind jedoch in der Figur nicht gezeigt.

Schließlich ist noch der weitere Gassensor 48 mittels einer Datenleitung 58 mit einem Prozessleitsystem 60 verbunden, das hier durch ein Computersymbol dargestellt sein soll. Auf diese Weise ist sichergestellt, dass das Auswertegerät 46 entweder die Signale, Meldungen, Alarmierungen oder Grenzwertüberschreitungen und so weiter in ein übergeordnetes Leitsystem einspeisen kann. Dieses Leitsystem kann beispielsweise das Prozessleitsystem einer Gesamtanlage sein oder auch ein Brandschutzüberwachungssystem.

### Bezugszeichenliste

- 10: erste Anordnung
- 12: erstes Schaltgerät
- 14: zweites Schaltgerät
- 16: drittes Schaltgerät
- 18: Schaltschrank
- 20: Kabel
- 22: Datensammler
- 24: Gassensor
- 26: erste Signalleitung
- 28: Auswertungselektronik
- 30: zweite Signalleitung
- 32: Sensorelement
- 34: Basiselement
- 36: Indikatorstoff
- 40: zweite Anordnung
- 42: Raum
- 44: Tür
- 46: Auswertungsgerät
- 48: weiterer Gassensor
- 50: dritte Signalleitung
- 52: Basisbauteil
- 54: Sensorbauteil
- 56: Mikrolüfter
- 58: Datenleitung
- 60: Prozessleitsystem

## Patentansprüche

1. Anordnung (10) zur Überwachung einer Schaltanlage auf thermische Belastung mit wenigstens einem Sensor und mit einer Auswertungselektronik (28), die mit dem wenigstens einen Sensor verbunden ist; mit einer Indikatorsubstanz (36), die an wenigstens einer Stelle oder an wenigstens einem Bauteil der Anlage angeordnet ist, wobei mit dem wenigstens einen Sensor die Indikatorsubstanz (36) detektierbar ist, **dadurch gekennzeichnet, dass** dass die Menge der in die Umgebung freigesetzten Indikatorsubstanzen temperaturabhängig ist, und dass der wenigstens eine Sensor ein Gaschromatograph oder ein Gassensor (24) ist und der Sensor eine Ventilationseinheit hat, die einen vorbestimmten Gasstrom über ein Detektorelement des Sensors leitet, wodurch die Detektionszeit einer zu erfassenden thermischen Beanspruchung verkürzt und die Genauigkeit des Sensors durch Zuführung eines gleichmäßigen Gasstroms erhöht ist.

2. Anordnung (10) nach Anspruch 1, **dadurch gekennzeichnet, dass** der wenigstens eine Sensor im Nahbereich der wenigstens einen Stelle oder des wenigstens einen Bauteils angeordnet ist.

3. Anordnung (10) nach einem der vorgenannten Ansprüche, **dadurch gekennzeichnet, dass** die Indikatorsubstanz (36) einem Trägermedium, insbesondere einem Betriebsmittel der Schaltanlage, wie dem Schmierstoff von beweglichen Bauteilen, einem Lack, einem Isoliermaterial oder einem Isoliergas, oder mehreren Trägermedien beigemischt ist.

4. Anordnung (10) nach einem der vorgenannten Ansprüche, **dadurch gekennzeichnet, dass** die Indikatorsubstanz (36) oder diese als Bestandteil eines Trägermediums auf die wenigstens eine Stelle oder auf das wenigstens eine Bauteil auftragbar ist.

5. Anordnung (10) nach einem der vorgenannten Ansprüche, **dadurch gekennzeichnet, dass** durch Auswahl der Indikatorsubstanz (36) oder durch den Mengenanteil an Indikatorsubstanz (36) im Trägermedium der Grenzwert zur Detektion der thermischen Belastung einstellbar ist.

6. Anordnung (10) nach einem der vorgenannten Ansprüche, **dadurch gekennzeichnet, dass** durch die Vorgabe einer maximalen Konzentration von Indikatorsubstanz (36) in der Umgebungsluft ein Grenzwert zur Feststellung einer thermischen Überlastung vorgebbar ist.

7. Anordnung (10) nach einem der vorgenannten Ansprüche, **dadurch gekennzeichnet, dass** die Signale des wenigstens einen Sensors oder dessen Signal je Zeiteinheit ein Maß für die thermische Belastung sind.

8. Anordnung (10) nach einem der vorgenannten Ansprüche, **dadurch gekennzeichnet, dass** die Anlage gekapselt ist, und dass wenigstens ein Sensor innerhalb der Kapselung angeordnet ist.

9. Anordnung (10) nach einem der vorgenannten Ansprüche, **dadurch gekennzeichnet, dass** eine Alarmierung wegen detektierter thermischer Beanspruchung erst ab einem vorgebbaren Schwellenwert an Konzentration der Indikatorsubstanz (36) in der sie umgebenden Atomsphäre erfolgt.

10. Anordnung (10) nach einem der vorgenannten Ansprüche, **dadurch gekennzeichnet, dass** die Totzeit, nämlich der Zeitspanne vom Auftreten bis zur Detektion einer thermischen Beanspruchung, von der Entfernung zwischen der zu überwachenden Stellen mit dem Indikatorstoff (36) und dem wenigstens .einen Sensor abhängig ist.

## Claims

1. Arrangement (10) for monitoring a switchgear installation, for thermal loading, having at least one sensor and having evaluation electronics (28) which are connected to the at least one sensor, with an indicator substance (36) which is arranged at at least one point or on at least one component in the installation, wherein the indicator substance (36) can be detected by the at least one sensor, **characterized in that** the amount of the indicator substances which is released into the environment is temperature-dependent, and **in that** the at least one sensor is a gas chromatograph or a gas sensor (24) and the sensor has a ventilation unit, which passes a predetermined gas flow over a detector element of the sensor, as a result of which the detection time for a thermal stress that is to be detected is shortened and the accuracy of the sensor is increased by supplying a uniform gas stream.

2. Arrangement (10) according to Claim 1, **characterized in that** the at least one sensor is arranged in the near area of the at least one point or of the at least one component.

3. Arrangement (10) according to one of the abovementioned claims, **characterized in that** the indicator substance (36) is mixed with a carrier medium, in particular a substance used in the switchgear installation, such as the lubricant for moving components, a paint or varnish, an insulating material or an insulating gas, or a plurality of carrier media.

4. Arrangement (10) according to one of the abovementioned claims, **characterized in that** the indicator substance (36), or this indicator substance (36) as a component of a carrier medium, can be applied to the at least one point or to the at least one component.

5. Arrangement (10) according to one of the abovementioned claims, **characterized in that** the limit value for detection of the thermal load can be set by selection of the indicator substance (36) or by selection of the proportion of the indicator substance (36) in the carrier medium.

6. Arrangement (10) according to one of the abovementioned claims, **characterized in that** a limit value for detection of thermal overloading can be preset by presetting a maximum concentration of indicator substance (36) in the environmental air.

7. Arrangement (10) according to one of the abovementioned claims, **characterized in that** the signals from the at least one sensor, or its signal per unit time, are or is a measure of the thermal loading.

8. Arrangement (10) according to one of the abovementioned claims, **characterized in that** the installation is encapsulated, and **in that** at least one sensor is arranged within the encapsulation.

9. Arrangement (10) according to one of the abovementioned claims, **characterized in that** an alarm as a result of thermal stressing being detected is produced only from a predeterminable threshold value for the concentration of the indicator substance (36) in the atmosphere surrounding it.

10. Arrangement (10) according to one of the abovementioned claims, **characterized in that** the dead time, specifically the time interval from the occurrence to the detection of thermal stressing, is dependent on the distance between the indicator substance (36) points to be monitored and the at least one sensor.

## Revendications

1. Agencement (10) pour la surveillance d'une installation de distribution concernant le stress thermique, avec au moins un capteur et avec un dispositif électronique d'évaluation (28) qui est relié à l'au moins un capteur ; avec une substance indicatrice (36), laquelle est mise en place au moins à un endroit ou bien sur au moins un élément constitutif de l'installation, dans lequel, avec l'au moins un capteur, la substance indicatrice (36) peut être détectée,
**caractérisé en ce que** la quantité des substances indicatrices libérée dans l'environnement est fonction de la température, et **en ce que** l'au moins un capteur est un chromatographe pour phase gazeuse ou un capteur de gaz (24) et **en ce que** le capteur a une unité de ventilation qui guide un flux de gaz prédéterminé via un élément de détection du capteur, moyennant quoi le temps de détection d'une contrainte thermique à détecter est raccourci et la précision du capteur augmentant grâce à l'amenée d'un flux de gaz régulier.

2. Agencement (10) selon la revendication 1, **caractérisé en ce que** l'au moins un capteur est disposé dans la zone de proximité de l'au moins un endroit ou de l'au moins un élément constitutif.

3. Agencement (10) selon l'une des revendications susmentionnées, **caractérisé en ce que** la substance indicatrice (36) est mélangée avec un milieu porteur, en particulier une matière consommable pour l'exploitation de l'installation de distribution, telle un lubrifiant d'éléments constitutifs mobiles, un vernis, un matériau isolant ou un verre isolant, ou avec plusieurs milieux porteurs.

4. Agencement (10) selon l'une des revendications susmentionnées, **caractérisé en ce que** la substance indicatrice (36), ou celle-ci en tant qu'un constituant d'un milieu porteur, peut être appliquée à l'au moins un endroit ou sur l'au moins un élément constitutif.

5. Agencement (10) selon l'une des revendications susmentionnées, **caractérisé en ce que**, grâce au choix de la substance indicatrice (36) ou grâce à la proportion en substance indicatrice (36) dans le milieu porteur, il est possible de régler la valeur limite pour la détection du stress thermique.

6. Agencement (10) selon l'une des revendications susmentionnées, **caractérisé en ce que**, grâce à la prescription d'une concentration maximale de substance indicatrice (36) dans l'air ambiant, il est possible de prescrire une valeur limite pour constater une surcharge thermique.

7. Agencement (10) selon l'une des revendications susmentionnées, **caractérisé en ce que** les signaux de l'au moins un capteur, ou bien le signal de celui-ci, sont une mesure par unité de temps pour le stress thermique.

8. Agencement (10) selon l'une des revendications susmentionnées, **caractérisé en ce que** l'installation est blindée et **en ce qu'**au moins un capteur est disposé à l'intérieur du blindage.

9. Agencement (10) selon l'une des revendications susmentionnées, **caractérisé en ce qu'**une diffusion d'alarme pour cause de contrainte thermique détectée a lieu seulement à partir d'une valeur de seuil prescriptible en concentration de la substance indicatrice (36) dans l'atmosphère qui l'entoure.

10. Agencement (10) selon l'une des revendications susmentionnées, **caractérisé en ce que** le temps mort, à savoir le laps de temps allant de l'apparition d'une contrainte thermique jusqu'à la détection de celle-ci, est fonction de la distance entre les endroits avec la substance indicatrice (36) à surveiller et l'au moins un capteur.
